## Europäisches Patentamt
## European Patent Office
## Office européen des brevets

(11) Veröffentlichungsnummer: **0 198 179**
**B1**

(12) **EUROPÄISCHE PATENTSCHRIFT**

(45) Veröffentlichungstag der Patentschrift:
**05.07.89**

(51) Int. Cl.⁴: **D 06 F 37/20, F 16 F 7/08**

(21) Anmeldenummer: **86102186.3**

(22) Anmeldetag: **20.02.86**

(54) **Reibungsdämpfer.**

(30) Priorität: **17.04.85 DE 3513838**

(43) Veröffentlichungstag der Anmeldung:
**22.10.86 Patentblatt 86/43**

(45) Bekanntmachung des Hinweises auf die Patenterteilung:
**05.07.89 Patentblatt 89/27**

(84) Benannte Vertragsstaaten:
**AT BE CH DE FR GB IT LI NL SE**

(56) Entgegenhaltungen:
**DE-A- 2 524 592**
**DE-A- 2 942 716**
**FR-A- 679 717**
**FR-A- 2 145 798**
**FR-A- 2 493 443**
**US-A- 2 459 537**

(73) Patentinhaber: **Fritz Bauer + Söhne oHG,
Industriestrasse 12-14, D-8503 Altdorf b. Nürnberg (DE)**

(72) Erfinder: **Bauer, Hans Jürgen, Am Eichenhain 8,
D-8503 Altdorf (DE)**
Erfinder: **Bauer, Hans-Peter, Ziegelhütte 9,
D-8503 Altdorf (DE)**

(74) Vertreter: **Rau, Manfred, Dr. Dipl.-Ing. et al, Rau &
Schneck, Patentanwälte Königstrasse 2,
D-8500 Nürnberg 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Reibungsdämpfer nach dem Oberbegriff des Anspruches 1.

Bei einem derartigen aus der DE-A-2 942 716 bekannten Reibungsdämpfer ist der mindestens eine Reibungsbelag als geschlossene ringzylindrische Hülse ausgebildet, die an ihrem Innenumfang unter Zugspannung steht. Dieser Reibungsdämpfer hat sich insbesondere beim Einsatz in Waschmaschinen mit Schleudergang außerordentlich bewährt. Die Herstellung ringzylindrischer Reibungsbeläge insbesondere aus einem geschlossenzelligen Schaumstoff ist aber aufwendig. Das Aufziehen derartiger Reibungsbeläge auf den Reibungskolben ist ebenfalls aufwendig.

Aus der US-A-2 459 537 ist ein Reibungsdämpfer insbesondere zum Einsatz in den Fahrwerken von Kraftfahrzeugen bekannt. Dieser Reibungsdämpfer weist ein ringzylindrisches Gehäuse und einen koaxial in diesem verschiebbaren Stößel auf, an dessen innerem Ende ein Reibungskolben ausgebildet ist. Dieser Reibungskolben weist eine am Stößel befestigte Stirnplatte und eine auf dem Stößel im Abstand hierzu verschiebbar angeordnete weitere Stirnplatte auf, die auf ihrer der am Stößel befestigten Stirnplatte gegenüberliegenden Seite mit einer vorgespannten Druckfeder belastet ist. An den beiden Stirnplatten ist ein schraubenförmig gewundener streifenförmiger Reibbelag mit seinen Enden befestigt, der an der Innenwand des zylindrischen Gehäuses anliegt. Durch diese Ausgestaltung werden unterschiedliche Reibungskräfte beim Einfahren des Stößels mit dem Reibungskolben in das Gehäuse und beim Ausfahren desselben aus dem Gehäuse erreicht.

Aus der DE-A-2 524 592 ist ein Reibungsdämpfer, insbesondere für Waschmaschinen mit Schleudergang, bekannt, der ein kreiszylindrisches Gehäuse und einen koaxial in diesem verschiebbaren Stößel mit einem zylindrischen Reibungskolben aufweist. Der Reibungskolben besteht aus einer Buchse mit kreiszylindrischer Außenform und aus diese Buchse radial überragenden und axial abstandsunveränderbar begrenzenden Gegenhalteflanschen. Auf den schneidenförmigen Rillen ist ein Reibbelag angeordnet, der aus einem Vlies aus Polyester besteht. Der Kolben besteht aus Metall.

Aus der DE-A-2 524 591 ist eine weitere Variante eines Reibungskolbens bekannt. Hierbei ist letzterer als Rohr ausgebildet und weist einen durchgehenden Längsschlitz auf. An seinen schulterförmigen Stirnseiten ist er auf je einer Tellerfeder geführt. Durch eine entsprechende Mutter kann der geschlitzte Kolben aufgeweitet werden, wodurch der Anpreßdruck für den jeweiligen Anwendungsfall nachträglich justiert werden kann.

Der Erfindung liegt die Aufgabe zugrunde, den Reibungsdämpfer der gattungsgemäßen Art so auszugestalten, daß der Aufwand für die Herstellung ringzylindrischer Reibungsbeläge vermieden und deren Montage vereinfacht wird.

Diese Aufgabe wird erfindungsgemäß durch die Merkmale in Kennzeichnungsteil des Anspruches 1 gelöst. Durch die erfindungsgemäßen Maßnahmen wird erreicht, daß der Reibungsbelag aus einer ebenen Platte aus geeignetem Material, beispielsweise einem geschlossenzelligen PU-Schaum, geschnitten werden kann. Dieser Streifen wird dann um den entsprechenden Auflageabschnitt am Reibungskolben herumgeschlungen und festgeklemmt. Das Festklemmen läßt sich montagetechnisch besonders einfach realisieren. Der Fertigungsaufwand wird hierdurch also sehr gering. Der Streifen kann hierbei in gleicher Weise vorgespannt werden, wie eine geschlossene ringzylindrische Reibungshülse.

Wenn die Ausgestaltung nach Anspruch 2, und zwar insbesondere in der Weiterbildung nach Anspruch 3 vorgesehen ist, dann brauchen die Enden des streifenförmigen Reibungsbelages nur in die Halteschlitze eingeschoben zu werden, wodurch die Befestigung bereits bewirkt wird. Durch entsprechend tiefes Hineinschieben nur eines Endes des streifenförmigen Reibungsbelages kann eine unterschiedliche Vorspannung des Reibungsbelages herbeigeführt werden. Die Maßnahmen nach Anspruch 4 führen zu einer besonders sicheren Klemmung der Enden des Reibungsbelages in den Halteschlitzen. Durch die Weiterbildung nach Anspruch 5 wird erreicht, daß die beiden Halteschlitze besonders dicht nebeneinanderliegen, so daß nur ein sehr kleiner Bereich nicht bei der Reibungsdämpfung wirksam ist. Dieser geringfügige Verlust an Reibungsfläche über den Umfang des Reibungsdämpfers fällt nicht ins Gewicht. Im Vergleich zu einem aus einer geschlossenen ringzylindrischen Hülse bestehenden Reibungsbelag braucht die axiale Erstreckung des erfindungsgemäßen Reibungsbelages nur geringfügig vergrößert zu werden. Im übrigen werden in dem Bereich, in dem die beiden Enden des streifenförmigen Reibungsbelages in die Halteschlitze eingezogen sind, kleine Kammern gebildet, in die sich Schmierfett setzt, so daß hier ein Schmierfettspeicher gebildet wird.

Wenn zwei Reibungsbeläge vorgesehen sind, dann führt die Ausgestaltung nach Anspruch 6 zu einer verbesserten Führungssymmetrie.

Eine alternative Ausgestaltung ist im Anspruch 7 angegeben.

Weitere Vorteile und Merkmale der Erfindung ergeben sich aus der nachfolgenden Beschreibung von zwei Ausführungsbeispielen anhand der Zeichnung. Es zeigt:

Fig. 1 einen Reibungsdämpfer gemäß der Erfindung im Längsschnitt,

Fig. 2 den Stößel des Reibungsdämpfers im Längsschnitt in teilweise aufgebrochener Darstellung,

Fig. 3 einen Querschnitt durch den Stößel entsprechend der Schnittlinie III-III in Fig. 2,

Fig. 4 einen Querschnitt durch den Reibungskolben einer geänderten Ausführungsform des Stößels und

Fig. 5 einen Reibungsbelag für die geänderte Ausführungsform nach Fig. 4 in einer perspektivischen Darstellung.

Der in der Zeichnung dargestellte Reibungsdämpfer weist ein Gehäuse 1 und einen Stößel 2 auf.

Das Gehäuse 1 besteht aus einem Rohr, das an einem Ende mittels eines Bodens 3 verschlossen ist. An der Außenseite des Bodens 3 ist ein sogenanntes Auge 4, also eine Gelenkbüchse zum Anlenken des

Reibungsdämpfers, angebracht. Dieses Auge 4 weist demzufolge eine zylindrische Ausnehmung 5 auf, deren Symmetrieachse 6 die Mittel-Längs-Achse 7 des Reibungsdämpfers senkrecht schneidet.

Das Gehäuse 1 mit Boden 3 und Auge 4 ist einstückig ausgebildet.

Der Stößel 2 weist ein seinem äußeren Ende ebenfalls ein Auge 8, also eine Anlenkbüchse, auf, das eine zylindrische Ausnehmung 9 aufweist, deren Achse 10 ebenfalls die Mittel-Längs-Achse 7 senkrecht schneidet. Der Stößel selber besteht im wesentlichen aus einem sich zum Auge 8 hin verjüngenden Rohr 11, das auf seiner Außenseite mittels Längsrippen 12 versteift ist. Am äußeren Ende dieses Rohres 11 ist das Auge 8 ausgebildet.

Das Rohr 11 weist eine Entlüftungsöffnung 13 auf.

Am im Gehäuse 1 befindlichen inneren Ende des Stößels 2 ist ein Reibungskolben 14 ausgebildet, der ringförmige, im Abstand voneinander ausgebildete und einander paarweise zugeordnete Gegenhalteflansche 15, 16 und 17, 18 aufweist. Zwischen den einander jeweils zugeordneten Gegenhalteflanschen 15, 16 bzw. 17, 18 sind etwa kreiszylindrische Auflage-Abschnitte 19, 20 ausgebildet, die ebenfalls konzentrisch zur Achse 7 angeordnet sind. Auf den Auflage-Abschnitten 19, 20 ist jeweils ein Reibungsbelag 21, 22 angeordnet. Diese Reibungsbeläge 21, 22 bestehen aus einem geschlossenzelligen, elastischen Schaumstoff.

Zwischen den einander unmittelbar benachbarten Gegenhalteflanschen 16, 17 ist ein nutförmiger Schmierfettspeicher 23 im Reibungskolben 14 ausgebildet.

Das im wesentlichen zylinderrohrförmige Gehäuse 1 weist eine im wesentlichen zylindrische Innenwand 24 auf. Im Bereich der Gehäuseöffnung ist ein Einführtrichter 25 mit einer deutlichen Durchmessererweiterung der Innenwand 24 ausgebildet. Das Gehäuse 1 einerseits und der Stößel 2 andererseits sind einstückig aus Kunststoff hergestellt, und zwar zweckmäßigerweise aus einem Homopolymer oder einem Polyacetal.

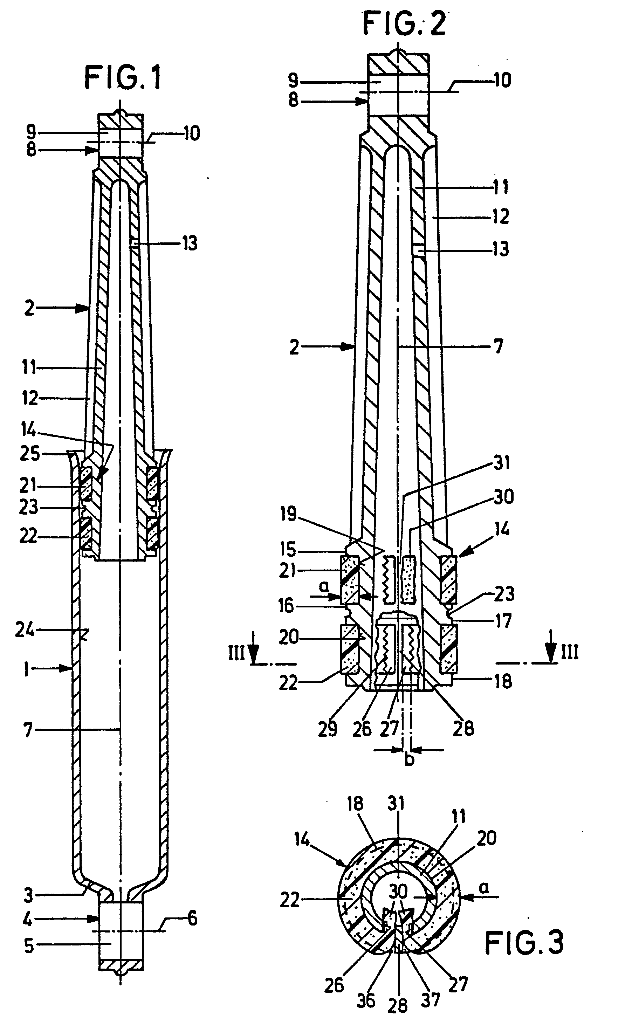

Die Auflage-Abschnitte 19, 20 sind nicht über ihren gesamten Umfang durchgehend kreiszylindrisch ausgebildet, sondern weisen einander unmittelbar benachbarte Halteschlitze 26, 27 auf, die nur für den Auflage-Abschnitt 20 in Fig. 2 dargestellt sind. Die Halteschlitz 26, 27 werden auf den einander benachbarten Seiten durch einen schmalen Steg 28 begrenzt, der sich zwischen den beiden zugeordneten Gegenhalteflanschen 17, 18 erstreckt. Die dem Steg 28 abgewandte Seite jedes Halteschlitzes 26, 27 wird durch eine Verzahnung 29 begrenzt. Die Reibungsbeläge 21, 22 sind als flache rechteckige Streifen ausgebildet, die zwischen den jeweils zugehörigen Gegenhalteflanschen 15, 16 bzw. 17, 18 um die entsprechenden Auflage-Abschnitte 19 bzw. 20 gelegt werden und deren Enden 30 dann in den jeweiligen Halteschlitz 26 bzw. 27 geschoben werden, so daß das jeweilige Ende 30 in den Innenraum 31 des Reibungskolbens 14 steht. Die Breite b der Halteschlitze 26 bzw. 27 in Umfangsrichtung der Auflage-Abschnitte 19 bzw. 20 ist deutlich geringer als die Dicke a der Reibungsbeläge 21 bzw. 22, so daß deren Enden 30 gegen Herausziehen gesichert gehalten werden, was durch die Verzahnung 29 noch unterstützt wird. Beim Einschieben der Enden 30 der Reibungsbeläge 21, 22 in den jeweils zugeordneten Halteschlitz 26 bzw. 27 können die Reibungsbeläge 21, 22 vorgespannt werden, wodurch die Reibungscharakteristik beeinflußbar ist.

Bei einer praktischen Ausführungsform sind bei Vorhandensein von zwei Reibungsbelägen 21, 22 die Halteschlitze 26, 27 in dem einen Auflage-Abschnitt 19 den entsprechenden Halteschlitzen in dem anderen Auflage-Abschnitt 20 diametral gegenüber angeordnet, so daß der Kolben gute Führungseigenschaften aufweist. Die Gegenhalteflansche 15 bis 18 berühren ja die Innenwand 24 des Gehäuses 1 nicht, d.h. die Führung des Stößels 2 erfolgt ausschließlich über die Reibungsbeläge 21, 22.

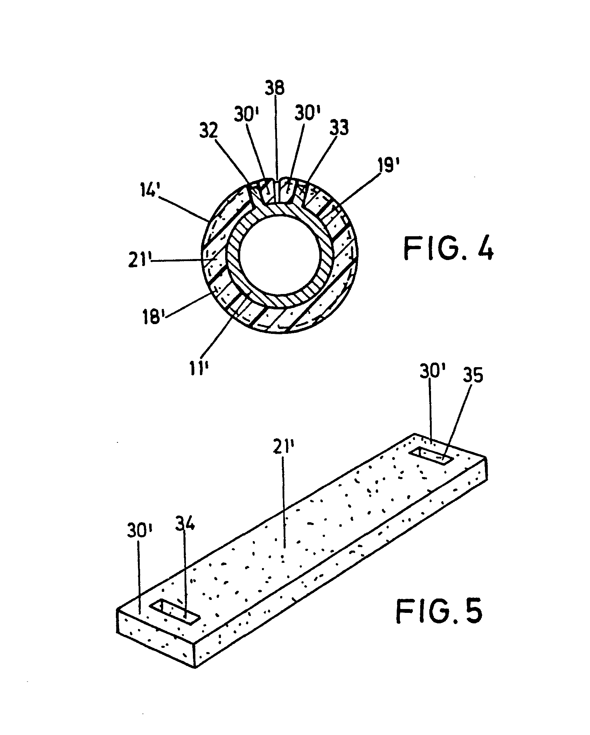

Bei einer abgewandelten Ausführungsform entsprechend den Fig. 4 und 5 ist der jeweilige Auflage-Abschnitt 19' eines Reibungskolbens 14' als durchgehende zylindrische Fläche ausgebildet, von der zwei nasenartige Halte-Vorsprünge 32, 33 radial nach außen vorspringen, die einander benachbart sind. In einem streifenförmigen Reibungsbelag 21' sind im Bereich der beiden Enden 30' Ausnehmungen 34, 35 vorgesehen, die die Halte-Vorsprünge 32 bzw. 33 aufnehmen. Hierdurch wird der jeweilige Reibungsbelag 21' fest zwischen den zugeordneten Gegenhalteflanschen, von denen nur der Gegenhalteflansch 18' dargestellt ist, auf dem Auflage-Abschnitt 19' gehalten. Je nachdem, wie der Abstand der Ausnehmungen 34, 35 dimensioniert wird, kann auch bei dieser Art der Festlegung des Reibungsbelages 21' eine Vorspannung durchgeführt werden.

Bei der Ausgestaltung nach den Fig. 2 und 3 bilden sich zwischen den der Außenfläche des jeweiligen Reibungsbelages 21 bzw. 22 um den Steg 28 kleine Kammern 36, 37, die als Reservespeicher für Schmierfett dienen. Eine ähnliche Kammer 38 bildet sich bei der Ausführungsform nach den Fig. 4 und 5 dort, wo sich die Enden 30' des streifenförmigen Reibungsbelages 21' stoßen.

## Patentansprüche

1. Reibungsdämpfer, insbesondere für Waschmaschinen mit Schleudergang, bestehend aus einem im wesentlichen kreiszylindrischen Gehäuse (1) und einem koaxial in diesem verschiebbaren, mit einem Ende aus dem Gehäuse (1) herausgeführten und am anderen Ende mit einem etwa zylindrischen Reibungskolben (14) versehenen Stößel (2), wobei der Reibungskolben (14) mindestens einen etwa kreiszylindrischen Auflage-Abschnitt (19, 20) und diesen radial überragende und axial abstandsunveränderbar begrenzende Gegenhalteflansche (15 bis 18) aufweist und wobei zwischen den Gegenhalteflanschen (15 bis 18) ein auf dem Auflage-Abschnitt (19, 20) abgestützter, elastisch gegen die Innenwand (24) des Gehäuses (1) angedrückter Reibungsbelag (21, 22; 22') aus elastisch nachgiebigem Schaumstoff angeordnet ist, dadurch gekennzeichnet, daß der Reibungsbelag (21, 22; 22') als flacher Streifen ausgebildet und zwischen den einander zugeordneten Gegenhalteflanschen (15, 16 bzw. 17, 18) um den Auflage-Abschnitt (19 bzw. 20) gelegt ist und daß dessen Enden (30; 30') am Reibungskolben (14) festgeklemmt sind.

2. Reibungskolben nach Anspruch 1, dadurch gekennzeichnet, daß am Reibungskolben (14) die Enden (30) des Reibbelages (21, 22) klemmend haltende Halteschlitze (26, 27) vorgesehen sind.

3. Reibungsdämpfer nach Anspruch 2, dadurch gekennzeichnet, daß die Halteschlitze (26, 27) am Auflage-Abschnitt (19, 20) ausgebildet sind.

4. Reibungsdämpfer nach Anspruch 2, dadurch gekennzeichnet, daß die Halteschlitze (26, 27) mit einer Verzahnung (29) versehen sind.

5. Reibungsdämpfer nach Anspruch 2, dadurch gekennzeichnet, daß die Halteschlitze (26, 27) durch einen Steg (28) begrenzt sind.

6. Reibungsdämpfer mit zwei Auflage-Abschnitten für zwei Reibungsbeläge nach einem der Ansprüche 1 bis 5, dadurch gekennzeichnet, daß die jeweiligen Halteabschnitte (26, 27) der beiden Auflage-Abschnitte (19, 20) einander diametral gegenüberliegen.

7. Reibungsdämpfer nach Anspruch 1, dadurch gekennzeichnet, daß der Reibungskolben mit Halte-Vorsprüngen (32, 33) versehen ist, die in entsprechende Ausnehmungen (34, 35) des Reibungsbelages (21') eingreifen.

## Claims

1. A friction damper, in particular for washing machines with a spin cycle, consisting of a substantially circular cylindrical housing (1) and a tappet (2) coaxially slidable within the housing (1) and extending from the housing (1) with one end and being provided with an approximately cylindrical friction piston (14) on the other end, wherein the friction piston (14) has at least one approximately circular cylindrical seating surface (19, 20) and bracing flanges (15 to 18) radially extending beyond the seating surface and axially limiting the seating surface with unchangeable distance, and wherein a friction coating (21, 22; 22') of elastically resilient foam plastic supported on the seating surface (19, 20) and pressing elastically against the interior surface (24) of the housing (1) is disposed between the bracing flanges (15 to 18), characterised in that the friction coating (21, 22; 22') is in the form of a flat strip and positioned between the associated bracing flanges (15, 16 and 17, 18, respectively) around the seating surface (19 and 20, respectively) and that its ends (30; 30') are clamped to the friction piston (14).

2. A friction damper according to claim 1, characterised in that retaining slits (26, 27) are provided on the friction piston (14), which retaining slits (26, 27) clampingly retain the ends (30) of the friction coating (21, 22).

3. A friction damper according to claim 2, characterised in that the retaining slits (26, 27) are disposed on the seating surface (19, 20).

4. A friction damper according to claim 2, characterised in that the retaining slits (26, 27) are provided with a denticulation (29).

5. A friction damper according to claim 2, characterised in that the retaining slits (26, 27) are delimited by a ridge (28).

6. A friction damper with two seating surfaces for two friction coatings according to one of the claims 1 to 5, characterised in that the respective retaining slits (26, 27) of the seating surfaces (19, 20) are placed diametrically opposite each other.

7. A friction damper according to claim 1, characterised in that the friction piston is provided with supporting projections (32, 33) which engage corresponding recesses (34, 35) of the friction coating (21').

## Revendications

1. Amortisseur à friction, notamment pour lave-linge à essorage, comprenant un carter (1) substantiellement cylindrique droit et un coulisseau (2) qui peut coulisser coaxialement dans ce carter, sort dudit carter (1) par une extrémité et est muni, à l'autre extrémité, d'un piston à friction (14) sensiblement cylindrique, ce piston à friction (14) présentant au moins une zone de contact (19, 20) sensiblement cylindrique droite, ainsi que des collets complémentaires de retenue (15 à 18) qui dépassent radialement de cette zone et assurent, dans le sens axial, une délimitation à espacement invariable, amortisseur dans lequel une garniture de friction (21, 22; 22') en une mousse douée de souplesse élastique, pressée élastiquement contre la paroi intérieure (24) du carter (1) et prenant appui sur la zone de contact (19, 20), est intercalée entre les collets complémentaires de retenue (15 à 18), caractérisé par le fait que la garniture de friction (21, 22; 22') est réalisée sous la forme d'une bande aplatie et est placée, autour de la zone de contact (19, respectivement 20), entre les collets complémentaires de retenue (15, 16, respectivement 17, 18) mutuellement associés; et par le fait que les extrémités (30; 30') de cette garniture sont assujetties au piston à friction (14).

2. Amortisseur à friction selon la revendication 1, caractérisé par le fait que des fentes de retenue (26, 27), retenant par coincement les extrémités (30) de la garniture de friction (21, 22), sont prévues sur le piston à friction (14).

3. Amortisseur à friction selon la revendication 2, caractérisé par le fait que les fentes de retenue (26, 27) sont ménagées sur la zone de contact (19, 20).

4. Amortisseur à friction selon la revendication 2, caractérisé par le fait que les fentes de retenue (26, 27) sont pourvues d'une denture (29).

5. Amortisseur à friction selon la revendication 2, caractérisé par le fait que les fentes de retenue (26, 27) sont délimitées par une membrure (28).

6. Amortisseur à friction comprenant deux zones de contact pour deux garnitures de friction, selon l'une des revendications 1 à 5, caractérisé par le fait que les fentes respectives de retenue (26, 27) des deux zones de contact (19, 20) sont diamétralement opposées l'une à l'autre.

7. Amortisseur à friction selon la revendication 1, caractérisé par le fait que le piston à friction est muni de saillies de retenue (32, 33), qui pénètrent dans des évidements correspondants (34, 35) de la garniture de friction (21').

FIG. 1

FIG. 2

FIG. 3

FIG. 4

FIG. 5